# EUROPEAN PATENT APPLICATION

(11) **EP 3 389 199 A1**
(43) Date of publication of application: **17.10.2018**
(21) Application number: 15911856.1
(22) Date of filing: 30.12.2015
(51) Int. Cl.: H04B 10/43, G02B 6/42

(54) **BI-DIRECTIONAL OPTICAL SUB-ASSEMBLY**

(71) Applicant: Huawei Technologies Co., Ltd., Longgang District Shenzhen, Guangdong 518129 (CN)
(72) Inventor: LI, Shu, Shenzhen Guangdong 518129 (CN); WANG, Zelin, Shenzhen Guangdong 518129 (CN); LI, Yuanmou, Shenzhen Guangdong 518129 (CN)
(74) Representative: Thun, Clemens
(86) International application number: PCT/CN2015/099957
(87) International publication number: WO 2017/113227

(57) **Abstract**

Embodiments of the present invention provide a bidirectional optical sub assembly, to eliminate optical and electrical crosstalk between a receiver and a transmitter in the bidirectional optical sub assembly. The bidirectional optical sub assembly includes: a base, made of a conducting material and including a first part and a second part; a wavelength division multiplexing part, configured to: reflect an optical signal of a first wavelength, or transmit an optical signal of a second wavelength, where the first wavelength is different from the second wavelength; an input port, configured to transmit a first electrical signal to a transmitter; the transmitter, configured to: convert the first electrical signal into a first optical signal, and transmit the first optical signal to the wavelength division multiplexing part, where the wavelength division multiplexing part is configured to reflect the first optical signal, and the wavelength division multiplexing part is further configured to transmit a second optical signal to a receiver; the receiver, configured to: convert the second optical signal into a second electrical signal, and output the second electrical signal by using an output port; and an isolation part, configured to electromagnetically isolate the receiver from the transmitter.

## Description

### TECHNICAL FIELD

The present invention relates to the field of optical communications, and more specifically, to a bidirectional optical sub assembly.

### BACKGROUND

With overall popularization of optical networks, access networks represented by fiber to the home (Fiber To The Home, FTTH) are being deployed on a large scale. Most optical communications networks used for access are in a form of a passive optical network (Passive Optical Network, PON). Deployment of a large quantity of passive optical networks requires a huge quantity of optical communications devices, and therefore there is an increasing requirement for reducing optical communications device costs. A related optical communications device in an optical communications network mainly includes an optical module, and a most important component in the optical module is a bidirectional optical sub assembly (Bi-directional Optical sub-assembly, BOSA). Therefore, optical communications device cost reduction mainly depends on bidirectional optical sub assembly cost reduction.

Currently, in the industry, a laser diode (Laser diode, LD) that sends an optical signal, a photodiode (Photodiode, PD) that receives an optical signal, and another component are generally packaged on one base, so as to reduce component costs. However, because the LD and the PD are located in same space, an optical signal sent by the LD is received by the PD, affecting receiving performance of the PD (that is, optical crosstalk of the LD to the PD occurs). In addition, because the LD converts an electrical signal into an optical signal, electromagnetic radiation generated by a high speed electrical signal spreads around, and as a result, the PD is interfered with, and the receiving performance of the PD is affected (that is, electrical crosstalk of the LD to the PD occurs).

In the prior art, to resolve a problem of optical and electrical crosstalk of an LD to a PD, a metal cover is added to cover an entire receiving area. There is an opening on the metal cover, so that both light transmission and electromagnetic shielding can be implemented.

However, space in the bidirectional optical sub assembly is very small. To dispose a shielding can, it is necessary to increase a size for packaging. In addition, because the base is a good conductor, electromagnetic radiation is transmitted on the base, and electromagnetic interference is caused to the PD that is disposed on the base. Consequently, an anti-crosstalk effect is unsatisfactory.

### SUMMARY

Embodiments of the present invention provide a bidirectional optical sub assembly, to reduce optical and electrical crosstalk between a receiver and a transmitter in the bidirectional optical sub assembly.

According to a first aspect, a bidirectional optical sub assembly is provided. The bidirectional optical sub assembly includes: a base 110, a receiver 120, a transmitter 130, a wavelength division multiplexing part 140, an isolation part 150, an input port 111, and an output port 112. The base 110 is made of a conducting material, and includes a first part and a second part, there is a height deviation H between the first part and the second part, and the height deviation H is determined according to relative positions of the receiver 120, the transmitter 130, and the wavelength division multiplexing part 140, where H is a positive number. The wavelength division multiplexing part 140 is configured on the first part, and is configured to: reflect an optical signal of a first wavelength, or transmit an optical signal of a second wavelength, where the first wavelength is different from the second wavelength. The input port 111 is configured to transmit a first electrical signal to the transmitter 130. The transmitter 130 is configured to: convert the first electrical signal into a first optical signal, and transmit the first optical signal to the wavelength division multiplexing part 140. The wavelength division multiplexing part 140 is configured to reflect the first optical signal. The wavelength division multiplexing part 140 is further configured to transmit a second optical signal to the receiver 120. The receiver 120 is configured to: receive the second optical signal, convert the second optical signal into a second electrical signal, and output the second electrical signal by using the output port 112. The isolation part 150 is configured to electromagnetically isolate the receiver 120 from the transmitter 130.

With reference to the first aspect, in a first implementation of the first aspect, the wavelength division multiplexing part 140 is a right-angle prism; a first right-angle surface of the right-angle prism is in contact with the first part surface to surface, a through hole is disposed on a surface, of the first right-angle surface, in contact with the first part, and the through hole is configured to make the second optical signal, that is transmitted through the right-angle prism, enter the second part and then be received by the receiver 120; an optical film is plated on a slope of the right-angle prism, and the optical film is used to reflect the first optical signal or transmit the second optical signal; and a photoresist adhesive is plated on a surface other than the slope and the first right-angle surface of the right-angle prism, and the photoresist adhesive is used to prevent stray light other than the second optical signal from entering the second part and being received by the receiver 120.

With reference to the first aspect and the foregoing implementation of the first aspect, in a second implementation of the first aspect, the bidirectional optical sub assembly further includes a trans-impedance amplifier 160 and a ground cable pin 113, where the trans-impedance amplifier 160 is grounded by using the ground cable pin 113, and the ground cable pin 113 is made of a conducting material, and is insulated from the base 110.

With reference to the first aspect and the foregoing implementations of the first aspect, in a third implementation of the first aspect, the bidirectional optical sub assembly further includes: a support part 170, made of a conducting material and configured to support the isolation part 150.

With reference to the first aspect and the foregoing implementations of the first aspect, in a fourth implementation of the first aspect, the second part is a groove structure, the isolation part is a metal sheet, and the metal sheet covers the groove.

With reference to the first aspect and the foregoing implementations of the first aspect, in a fifth implementation of the first aspect, at least one independent pin 114 is configured on the base, and the at least one independent pin 114 is insulated from the base 110.

With reference to the first aspect and the foregoing implementations of the first aspect, in a sixth implementation of the first aspect, the isolation part 150 is conductively connected to the base 110.

With reference to the first aspect and the foregoing implementations of the first aspect, in a seventh implementation of the first aspect, a groove is configured on the first part, and an end, of the input port 111, that is used to connect to the transmitter 130 is disposed in the groove.

According to the bidirectional optical sub assembly provided in the embodiments of the present invention, the base is divided into two spatially isolated parts by using the isolation part, and the receiver and the transmitter are respectively disposed on the two parts that are isolated from each other, so that the receiver is electromagnetically isolated from the transmitter, and optical and electrical crosstalk between the receiver and the transmitter can be eliminated.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic structural diagram of a single-TO BOSA in the prior art;
FIG. 2 is a schematic structural diagram of a bidirectional optical sub assembly according to an embodiment of the present invention;
FIG. 3 is a schematic top view of a bidirectional optical sub assembly according to an embodiment of the present invention;
FIG. 4 is a schematic structural diagram of a bidirectional optical sub assembly according to another embodiment of the present invention;
FIG. 5 is a schematic top view of a bidirectional optical sub assembly according to another embodiment of the present invention;
FIG. 6 is a schematic structural diagram of a bidirectional optical sub assembly according to still another embodiment of the present invention; and
FIG. 7 is a schematic top view of a bidirectional optical sub assembly according to still another embodiment of the present invention.

### Reference signs in the accompanying drawings:

110-base
111-input port
112-output port
113-ground cable pin
114-independent pin
120-receiver
130-transmitter
140-wavelength division multiplexing part
150-isolation part
160-trans-impedance amplifier
170-support part

### DESCRIPTION OF EMBODIMENTS

A plurality of embodiments are now described with reference to the accompanying drawings, and same components in this specification are indicated by a same reference numeral. In the following description, for ease of explanation, many specific details are provided to facilitate comprehensive understanding of one or more embodiments. However, apparently, the embodiments may be not implemented by using these specific details. In other examples, a well-known structure and device are shown in a form of block diagrams, to conveniently describe one or more embodiments.

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

It should be understood that technical solutions in the embodiments of the present invention may be applied to various optical networks, for example, a passive optical network (Passive Optical Network, PON). For ease of description, the PON is used as an example instead of a limitation, to describe a bidirectional optical sub assembly in the embodiments of the present invention below.

In the prior art, to reduce costs of the bidirectional optical sub assembly, an LD and a PD are packaged on a same base, that is, the LD and the PD are located in same enclosed space. The LD converts an electrical signal into an optical signal, and the PD converts an optical signal into an electrical signal. If the LD is not photoelectrically isolated from the PD, the transmitter causes interference of optical crosstalk and electrical crosstalk to the receiver. On one hand an optical signal transmitted by a transmitter may reach a receiver; or even if a wavelength division multiplexing (Wavelength Division Multiplexing, WDM) part is used to isolate light transmitted by the LD from light to be received by the PD, due to optical path divergence, undetermined stray light exists and experiences reflection or another operation performed by surrounding components, and then reaches the PD in a zigzag manner. Further, an optical signal to be received by the PD is very weak compared with an optical signal transmitted by the LD. As a result, receiving performance of the PD is affected. This is optical crosstalk of the LD to the PD. On the other hand, because the LD converts the electrical signal into the optical signal, a high speed electrical signal is accompanied with electromagnetic radiation, that is, a signal to be converted by using the LD spreads around in a form of electromagnetic radiation. As a result, interference is caused to the PD and an electronic component behind the PD, and receiving performance is also affected. This is electrical crosstalk of the LD to the PD.

Currently, to eliminate optical and electrical crosstalk of the transmitter to the receiver in the bidirectional optical sub assembly, a solution is provided. In this solution, a receiving component and a transmitting component are disposed on a same base, a micro-feature platform made of a silicon (Si) material is used, and a PD is spatially isolated from an LD by using a platform feature, so that stray light from the LD can hardly reach the PD, or cause interference to the PD, thereby reducing optical crosstalk to some extent. However, features of this structure are complicated, and required components need to be customized. In addition, for electromagnetic radiation, the silicon material cannot provide a very good electromagnetic isolation effect. Further, costs are increased in order to reduce the optical and electrical crosstalk.

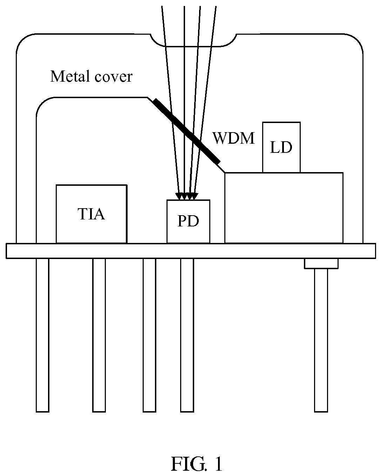

FIG. 1 shows a schematic structural diagram of a single-TO BOSA in another solution. As shown in FIG. 1, in this solution, a metal cover is added, to cover an entire receiving area. In this way, a receiver (or a PD) is enclosed in the metal cover, and a transmitter (or an LD) is outside the metal cover. In addition, there is an opening on the metal cover, and a WDM chip is disposed on the opening, so that light that is incident through a window is transmitted into the metal cover by the WDM chip, and then is received by the PD. Light transmitted by the LD may reach the WDM chip, and is transmitted through the window after being reflected by the WDM chip. Therefore, a metal cover structure is disposed to implement both light transmission and electromagnetic shielding.

However, space inside a transistor outline (Transistor Outline, TO) is very small. To dispose a shielding can, it is necessary to increase a size of the base for packaging. In addition, because the entire base is a good conductor, electromagnetic radiation is transmitted on the base, and electromagnetic interference is caused to the PD and a related receiving component that are disposed on the base. Consequently, an effect of optical and electrical crosstalk defense is unsatisfactory.

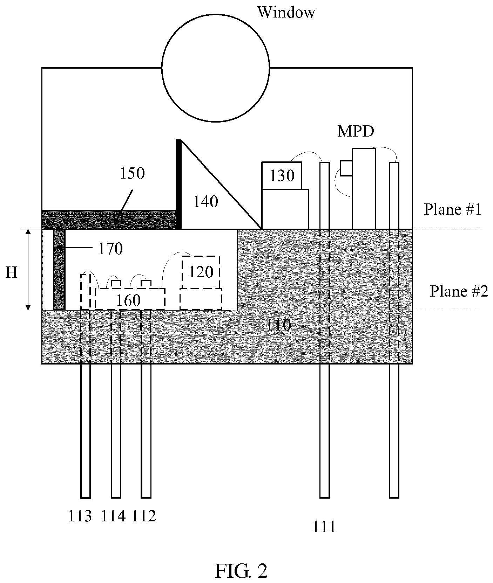

The following describes in detail a bidirectional optical sub assembly according to embodiments of the present invention with reference to FIG. 2 to FIG. 5.

FIG. 2 is a schematic structural diagram of a bidirectional optical sub assembly according to an embodiment of the present invention.

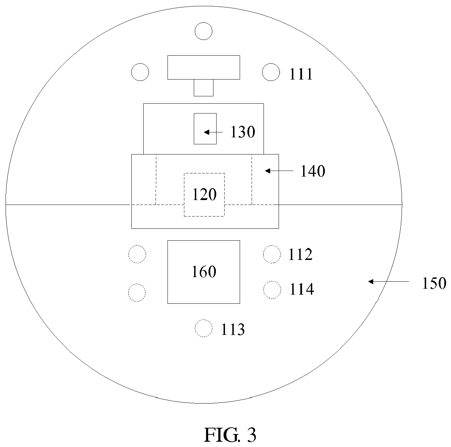

FIG. 3 shows a schematic top view of the bidirectional optical sub assembly shown in FIG. 2.

As shown in FIG. 2 and FIG. 3, the bidirectional optical sub assembly includes:
a base 110, a receiver 120, a transmitter 130, a wavelength division multiplexing part 140, an isolation part 150, an input port 111, and an output port 112.

The base 110 is made of a conducting material, and includes a first part and a second part.

The input port 111 and the output port 112 are respectively configured to input an electrical signal and output an electrical signal.

The receiver 120 is configured to perform optical-to-electrical conversion.

The transmitter 130 is configured to perform electrical-to-optical conversion.

The wavelength division multiplexing part 140 is configured to: reflect an optical signal of a first wavelength, or transmit an optical signal of a second wavelength, where the first wavelength is different from the second wavelength.

The isolation part 150 is configured to electromagnetically isolate the receiver 120 from the transmitter 130.

The following separately describes in detail a connection relationship, a structure, and a function of each component with reference to FIG. 2 and FIG. 3.

### A. Base 110

The base 110 is used as a bearer component of a plurality of components that are included in the bidirectional optical sub assembly according to this embodiment of the present invention, and is made of a conducting material, for example, a conductor or a semiconductor. Further, in this embodiment of the present invention, as an example instead of a limitation, the base may be fabricated as a structure including two planes (that is, examples of the first part and the second part), for example, a plane #1 and a plane #2. As shown in FIG. 2, another component in this embodiment of the present invention may be separately configured on the plane #1 and the plane #2, and the receiver 120 and the transmitter 130 need to be located on different planes. In addition, there is a height deviation H between the plane #1 and the plane #2, H is a positive number, the height deviation H is determined according to relative positions of the receiver 120, the transmitter 130, and the wavelength division multiplexing part 140, and the height deviation H is a real number greater than zero. FIG. 2 is used as an example. The receiver 120 is configured on the plane #2. Therefore, the height deviation H at least ensures that the entire receiver 120 is disposed on the plane #2, and a top of the receiver to be still lower than the plane #1. It should be noted that in this embodiment of the present invention, the receiver 120 is used as an example to describe a condition that the height deviation H between the first part and the second part of the base 110 needs to meet. However, the present invention is not limited thereto. For example, when another functional component is configured on the plane #1, the condition should be determined by the receiver and the another functional component, so that all components can be totally disposed on the plane #2, and a peak of each component is not higher than the plane #1.

### B. Receiver 120

The receiver 120 serves as a receiving component of an optical signal, is configured on the second part of the base 110, and is mainly configured to implement a function of optical-to-electrical conversion, so that a received optical signal is converted into an electrical signal. The receiver 120 may be a photoelectric sensor component, for example, may be a photodiode (Photodiode, PD).

### C. Transmitter 130

The transmitter 130 is configured on the first part of the base 110, and is mainly configured to implement a function of electrical-to-optical conversion, so that an electrical signal is converted into an optical signal. The transmitter 130 may be a laser diode (Laser diode, LD).

### D. Wavelength division multiplexing part 140

In this embodiment of the present invention, the wavelength division multiplexing part 140 is mainly configured to process an optical signal according to a wavelength of the optical signal. The wavelength division multiplexing part 140 reflects the optical signal of the first wavelength; and the wavelength division multiplexing part 140 transmits the optical signal of the second wavelength, where the first wavelength is different from the second wavelength.

It should be noted that in this embodiment of the present invention, serial numbers "first" and "second" are merely used for distinguishing different objects such as optical signals of different wavelengths, and are not intended to limit the scope of this embodiment of the present invention.

### E. Isolation part 150

The isolation part 150 is made of a conducting material, and the isolation part 150, the wavelength division multiplexing part 140, a plane (for example, the plane #2 in FIG. 2) on which the second part of the base 110 is located, and a side wall (not shown in the figure) of the base 110 form a cavity, to enclose the receiver 120 configured on the second part in the cavity, so that electromagnetic interference between the receiver 120 and the transmitter 130 that is configured on the plane #1 on which the first part of the base 110 is located can be blocked. In this way, the receiver is electromagnetically isolated from the transmitter.

Optionally, the wavelength division multiplexing part 140 is a right-angle prism.

A first right-angle surface of the right-angle prism is in contact with the first part surface to surface, a through hole is disposed on a surface, of the first right-angle surface, in contact with the first part, and the through hole is configured to make a second optical signal, that is transmitted through the right-angle prism, enter the second part and then be received by the receiver 120.

An optical film is plated on a slope of the right-angle prism, and the optical film is used to reflect a first optical signal or transmit the second optical signal.

A photoresist adhesive is plated on a surface other than the slope and the first right-angle surface of the right-angle prism, and the photoresist adhesive is used to prevent stray light other than the second optical signal from entering the second part and being received by the receiver 120.

In this embodiment of the present invention, a wavelength is selected by plating a film on the surface of the right-angle prism, so that the right-angle prism reflects the first optical signal that is transmitted by the transmitter 130, and the first optical signal is transmitted outside through a window (shown in FIG. 2). In addition, the right-angle prism can transmit the second optical signal that is incident through the window, so that the second optical signal enters the second part of the base 110 through the right-angle prism, and is received by the receiver 120 that is configured on the second part.

Specifically, the optical film is plated on the slope of the right-angle prism, and the optical film is used to reflect light of the first wavelength, and transmit light of the second wavelength. In addition, a photoresist adhesive is plated on the other three surfaces except the first right-angle surface (that is, a right-angle surface that is in contact with the first part of the base 110) of the right-angle prism, and the photoresist adhesive covers the surfaces of the right-angle prism, thereby reducing a possibility that an optical signal transmitted by the transmitter 130 enters the second part of the base 110 and is received by the receiver 120.

It should be noted that in this embodiment of the present invention, the right-angle prism may be a 45-degree right-angle prism. This is not limited in this embodiment of the present invention.

Optionally, the bidirectional optical sub assembly further includes a trans-impedance amplifier 160 and a ground cable pin 113.

The trans-impedance amplifier 160 is grounded by using the ground cable pin 113, the ground cable pin 113 is made of a conducting material, and is insulated from the base 110.

Specifically, because light received by the receiver (for example, the PD) 120 is usually relatively weak, an electrical signal that is obtained after optical-to-electrical conversion by the receiver 120 is also weak, and generally needs to be amplified for processing. The trans-impedance amplifier (Trans-impedance amplifier, TIA) 160 is configured to amplify the weak electrical signal that is output by the receiver 120. Therefore, the trans-impedance amplifier 160 is also configured on the second part of the base 110, and is electrically connected to the receiver 120. In addition, the ground cable pin is configured on the base 110, and the ground cable pin is insulated from the base 110. A ground cable electrode (not marked in the accompanying drawing) is configured on the trans-impedance amplifier, and the ground cable electrode is electrically connected to the ground cable pin 113, so that the trans-impedance amplifier is grounded.

It should be noted that in the prior art, the trans-impedance amplifier 160 is grounded by electrically connecting the trans-impedance amplifier to the base 110. It should be understood that the base is made of a conducting material, and therefore, electromagnetic radiation may be transmitted on the base 110, an electromagnetic wave transmitted on the base 110 may cause electromagnetic interference to the receiver 120 configured on the base 110, and performance of the receiver 120 for receiving a signal is affected. In this embodiment of the present invention, the ground cable pin 113 is configured on the base 110, the ground cable pin 113 is insulated from the base 110, and the trans-impedance amplifier is grounded by using the ground cable pin 113, so that electrical crosstalk that is caused to the receiver 120 by the electromagnetic wave generated on the base 110 can be reduced.

Optionally, the bidirectional optical sub assembly further includes a support part 170, and the support part 170 is made of a conducting material, and is configured to support the isolation part 150.

It should be understood that in this embodiment of the present invention, the base 110 includes the first part and the second part. When the second part is an entire surface of the base, the support part 170 needs to be configured, to support the isolation part 150, so that the isolation part 150, the first part of the base 110, the wavelength division multiplexing part 140, and the side wall of the base 110 form the cavity, and the first part is spatially isolated from the second part.

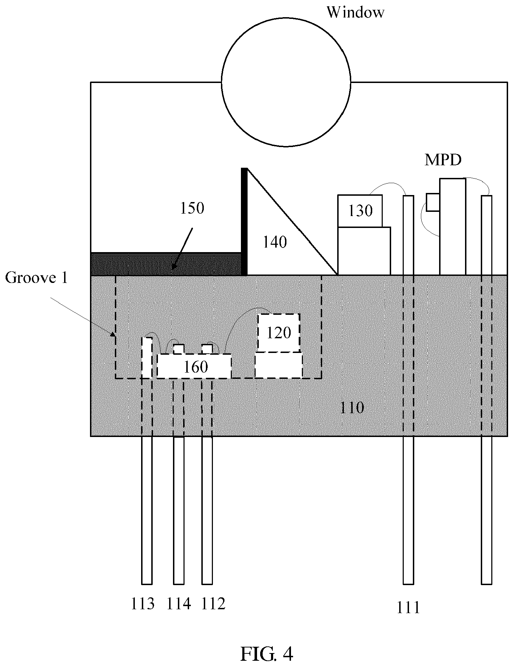

FIG. 4 shows a schematic structural diagram of a bidirectional optical sub assembly according to another embodiment of the present invention.

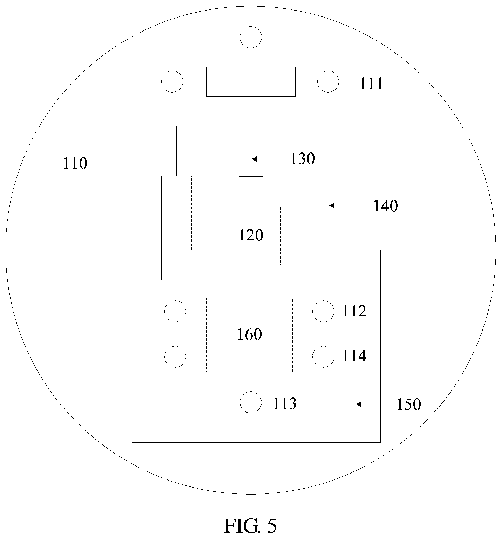

FIG. 5 shows a schematic top view of the bidirectional optical sub assembly shown in FIG. 4.

Optionally, the second part is a groove structure, the isolation part is a metal sheet, and the metal sheet covers the groove.

As shown in FIG. 4, a groove (that is, an example of the second part) is disposed on the base 110. In this case, the isolation part 150 may be a metal sheet, and the metal sheet covers the groove (for example, a groove 1 in FIG. 4), so as to eliminate electrical crosstalk that is caused to the receiver 120 by the base 110. That is, the metal sheet and the groove structure of the base are combined to form an electromagnetic crosstalk shielding structure, so as to eliminate electromagnetic interference in space.

Optionally, at least one independent pin 114 is configured on the base 110, and the at least one independent pin 114 is insulated from the base 110.

In the prior art, an electrode (for example, a ground cable electrode) on the trans-impedance amplifier 160 is connected to the base 110 by using a gold wire, and the base 110 is made of a conducting material. Therefore, electromagnetic radiation is transmitted on the base. Consequently, electromagnetic interference is caused to the trans-impedance amplifier disposed on the base 110, and an anti-crosstalk effect is unsatisfactory.

In this embodiment of the present invention, at least one independent pin (for example, the pin 114 in FIG. 4) is configured on and insulated from the base 110, and is configured to connect to at least one corresponding electrode on the trans-impedance amplifier 160, so that electromagnetic interference that is caused to the trans-impedance amplifier by the electromagnetic radiation transmitted on the base 110 can be reduced without increasing costs.

Optionally, the isolation part 150 is conductively connected to the base 110.

Specifically, the isolation part 150 may be conductively connected to the base 110 by using laser welding and the like. In this way, the isolation part 150 and the base 110 may properly form a shielding can, to block electromagnetic radiation in space, so that anti-electrical crosstalk performance of the bidirectional optical sub assembly can be improved.

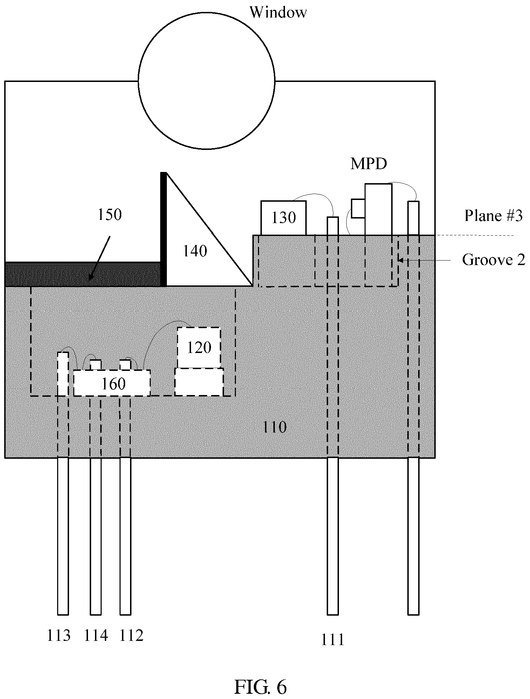

FIG. 6 is a schematic structural diagram of a bidirectional optical sub assembly according to still another embodiment of the present invention.

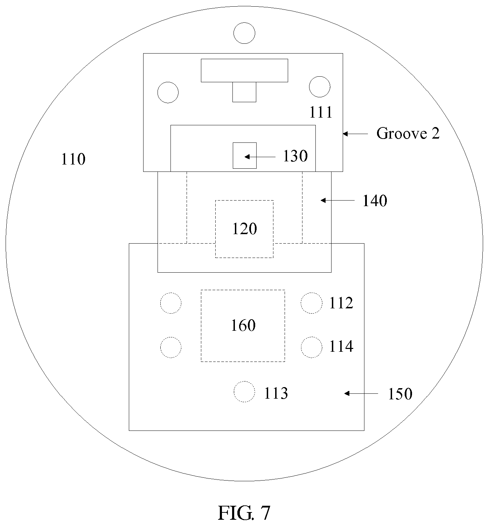

FIG. 7 is a schematic top view of the bidirectional optical sub assembly according to still another embodiment of the present invention.

Optionally, a groove is configured on the first part, and an end, of the input port 111, that is used to connect to the transmitter 130 is disposed in the groove.

As shown in FIG. 6 and FIG. 7, a plane #3 is a plane on which the base 110 is located, and a groove (for example, a groove 2 in FIG. 6) is configured on the first part of the base 110. The end, of the input port 111, that is used to connect to the transmitter 130 (refer to an end, of the input port 111, that is wired to the transmitter 130 in FIG. 6) is disposed in the groove. Because the input port 111 is made of a conducting material, an electromagnetic wave generated by an electrical signal that is input from the input port 111 is radiated around. A groove structure in this embodiment of the present invention can block electromagnetic radiation. In this way, electrical crosstalk of the input port 111 to the PD can be reduced.

It should be noted that in this embodiment of the present invention, the end, of the input port 111, that is used to connect to the transmitter 130 may be disposed in the groove, or the transmitter 130 or an entire transmission area may be disposed in the groove. This is not limited in this embodiment of the present invention.

In addition, a monitor photodiode (Monitor Photodiode, MPD) shown in FIG. 2, FIG. 4, and FIG. 6 is configured to monitor a working status of the LD. This is not described in detail in this embodiment of the present invention.

The foregoing describes a structure of the bidirectional optical sub assembly according to the embodiment of the present invention with reference to FIG. 2 to FIG. 7. The following uses FIG. 2 as an example, to separately describe processes of signal receiving (that is, a case 1) and signal transmitting (that is, a case 2) by the bidirectional optical sub assembly according to the embodiments of the present invention.

### Case 1

First, an electrical signal (denoted as an electrical signal 1 below) that requires electrical-to-optical conversion is input to the bidirectional optical sub assembly by using the input port 111, and the input port 111 transmits the first electrical signal to the transmitter 130. The transmitter 130 performs electrical-to-optical conversion on the electrical signal 1, and converts the electrical signal 1 into an optical signal (denoted as an optical signal 1 below). The optical signal 1 generated by the transmitter 130 is transmitted to the wavelength division multiplexing part 140, and more precisely, the optical signal 1 is transmitted to a slope of the wavelength division multiplexing part 140. The wavelength division multiplexing part 140 reflects the incident optical signal, and then optical signal is transmitted outside through a window. In this way, the bidirectional optical sub assembly completes optical signal transmission.

### Case 2

First, an optical signal (denoted as an optical signal 2 below) that needs to be converted into an electrical signal is incident through a window, and reaches a slope of the wavelength division multiplexing part 140. The wavelength division multiplexing part 140 transmits the optical signal 2, so that the optical signal 2 enters the second part of the base 110 and is received by the receiver 120 that is configured on the second part. Then, the receiver 120 performs optical-to-electrical conversion on the optical signal 2 to convert the optical signal 2 into an electrical signal (denoted as an electrical signal 2 below), and outputs the electrical signal 2 by using the output port 112 of the bidirectional optical sub assembly. In this way, the bidirectional optical sub assembly completes optical signal receiving.

According to the bidirectional optical sub assembly provided in the embodiments of the present invention, the base is divided into two spatially isolated parts by using the isolation part, and the receiver and the transmitter are respectively disposed on the two parts that are isolated from each other, so that the receiver is electromagnetically isolated from the transmitter, and optical and electrical crosstalk between the receiver and the transmitter can be eliminated.

In addition, according to the bidirectional optical sub assembly provided in the embodiments of the present invention, the trans-impedance amplifier is grounded by using the ground cable pin that is insulated from the base, so that electrical crosstalk of the base to the receiver can be eliminated.

In addition, according to the bidirectional optical sub assembly provided in the embodiments of the present invention, stray light crosstalk in a single TO can be eliminated by using a wavelength division multiplexing part of a prism type in combination with a photoresist structure on a side of the wavelength division multiplexing part.

In addition, according to the bidirectional optical sub assembly provided in the embodiments of the present invention, optical and electrical crosstalk can be eliminated in narrow single-TO space, and costs the bidirectional optical sub assembly can be reduced.

The foregoing descriptions are merely specific implementations of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A bidirectional optical sub assembly, comprising: a base (110), a receiver (120), a transmitter (130), a wavelength division multiplexing part (140), an isolation part (150), an input port (111), and an output port (112), wherein
the base (110) is made of a conducting material, and comprises a first part and a second part, there is a height deviation H between the first part and the second part, and the height deviation H is determined according to relative positions of the receiver (120), the transmitter (130), and the wavelength division multiplexing part (140), wherein H is a positive number;
the wavelength division multiplexing part (140) is configured to: reflect an optical signal of a first wavelength, or transmit an optical signal of a second wavelength, wherein the first wavelength is different from the second wavelength;
the input port (111) is configured to transmit a first electrical signal to the transmitter (130);
the transmitter (130) is configured to: convert the first electrical signal into a first optical signal, and transmit the first optical signal to the wavelength division multiplexing part (140);
the wavelength division multiplexing part (140) is configured to reflect the first optical signal;
the wavelength division multiplexing part (140) is further configured to transmit a second optical signal to the receiver (120);
the receiver (120) is configured to: receive the second optical signal, convert the second optical signal into a second electrical signal, and output the second electrical signal by using the output port (112); and
the isolation part (150) is configured to electromagnetically isolate the receiver (120) from the transmitter (130).

2. The bidirectional optical sub assembly according to claim 1, wherein the wavelength division multiplexing part (140) is a right-angle prism;
a first right-angle surface of the right-angle prism is in contact with the first part surface to surface, a through hole is disposed on a surface, of the first right-angle surface, in contact with the first part, and the through hole is configured to make the second optical signal, that is transmitted through the right-angle prism, enter the second part and then be received by the receiver (120);
an optical film is plated on a slope of the right-angle prism, and the optical film is used to reflect the first optical signal or transmit the second optical signal; and
a photoresist adhesive is plated on a surface other than the slope and the first right-angle surface of the right-angle prism, and the photoresist adhesive is used to prevent stray light other than the second optical signal from entering the second part and being received by the receiver (120).

3. The bidirectional optical sub assembly according to claim 1 or 2, wherein the bidirectional optical sub assembly further comprises a trans-impedance amplifier (160) and a ground cable pin (113);
the trans-impedance amplifier (160) is grounded by using the ground cable pin (113); and
the ground cable pin (113) is made of a conducting material, and is insulated from the base (110).

4. The bidirectional optical sub assembly according to any one of claims 1 to 3, wherein the bidirectional optical sub assembly further comprises:
a support part (170), made of a conducting material and configured to support the isolation part (150).

5. The bidirectional optical sub assembly according to any one of claims 1 to 4, wherein the second part is a groove structure, the isolation part is a metal sheet, and the metal sheet covers the groove.

6. The bidirectional optical sub assembly according to any one of claims 1 to 5, wherein at least one independent pin (114) is configured on the base, and the at least one independent pin (114) is insulated from the base (110).

7. The bidirectional optical sub assembly according to any one of claims 1 to 6, wherein the isolation part (150) is conductively connected to the base (110).

8. The bidirectional optical sub assembly according to any one of claims 1 to 7, wherein a groove is configured on the first part, and an end, of the input port (111), that is used to connect to the transmitter (130) is disposed in the groove.
